# NEUE EUROPÄISCHE PATENTSCHRIFT

(11) **EP 1 642 179 B2**
(45) Veröffentlichungstag und Bekanntmachung des Hinweises auf die Entscheidung über den Einspruch: **19.07.2017**
(45) Hinweis auf die Patenterteilung: 22.05.2013
(21) Anmeldenummer: 04763026.4
(22) Anmeldetag: 25.06.2004
(51) Int. Cl.: G05B 19/042, G05B 19/05

(54) **VORRICHTUNG ZUM AUTOMATISIERTEN STEUERN EINES BETRIEBSABLAUFS BEI EINER TECHNISCHEN ANLAGE**
DEVICE FOR AUTOMATICALLY CONTROLLING A TECHNICAL SYSTEM OPERATION
DISPOSITIF POUR COMMANDER DE MANIERE AUTOMATISEE LE DEROULEMENT D'UNE OPERATION DANS UNE INSTALLATION TECHNIQUE

(30) Priorität: 04.07.2003 DE 10330916
(43) Veröffentlichungstag der Anmeldung: 05.04.2006
(73) Patentinhaber: Pilz GmbH & Co. KG, 73760 Ostfildern (DE)
(72) Erfinder: SCHWENKEL, Hans, 70192 Stuttgart (DE); WIEGERT, Alexander, 70771 Leinfelden-Echterdingen (DE)
(74) Vertreter: Witte, Weller & Partner Patentanwälte mbB
(86) Internationale Anmeldenummer: PCT/EP2004/006909
(87) Internationale Veröffentlichungsnummer: WO 2005/003869

(56) Entgegenhaltungen:
- EP-A- 0 155 213
- EP-A2- 0 837 394
- EP-B1- 1 035 953
- EP-B1- 1 192 511
- WO-A-00/79353
- WO-A-96/28769
- DE-A1- 10 008 434
- DE-A1- 10 020 074
- DE-A1- 19 814 102
- DE-C2- 19 718 284

## Beschreibung

Die vorliegende Erfindung betrifft eine Vorrichtung zum automatisierten Steuern eines Betriebsablaufs bei einer technischen Anlage gemäß Anspruch 1 und eine E/A-Einheit gemäß Anspruch 13.

Eine gattungsgemäße Vorrichtung und eine entsprechende E/A-Einheit sind aus EP 0 155 213 A1 bekannt.

Bei der Steuerung von technischen Anlagen hat sich seit einigen Jahren die Verwendung von so genannten Feldbussen etabliert. Der Feldbus ist ein Kommunikationsmedium, der verschiedene an der Steuerung der Anlage beteiligte Komponenten miteinander vernetzt. Insbesondere können über den Feldbus eine Steuereinheit und räumlich davon abgesetzte E/A-Einheiten kommunizieren. Die Steuereinheit, in aller Regel eine SPS (speicherprogrammierbare Steuerung) oder auch ein Industriecomputer, arbeitet ein Anwenderprogramm ab, das in Abhängigkeit von Zustandssignalen der technischen Anlage Steuerbefehle erzeugt. Die Steuerbefehle werden mit Hilfe der E/A-Einheiten in Steuersignale umgewandelt, die ihrerseits dann verschiedene Aktoren der Anlage antreiben. Aktoren sind beispielsweise elektrische Antriebe oder auch elektromagnetisch angesteuerte Ventile. Die Zustandssignale der Anlage werden über Sensoren, beispielsweise Drehzahlsensoren, erfasst und ebenfalls über die E/A-Einheiten an die Steuereinheit gemeldet.

Die Verwendung von Feldbussen besitzt den Vorteil, dass eine Vielzahl von räumlich verteilten E/A-Einheiten vergleichsweise einfach mit einer oder sogar mehreren übergeordneten Steuereinheiten vernetzt werden können.

In vielen Fällen gehen vom Betrieb einer automatisiert gesteuerten Anlage Gefahren aus, beispielsweise für Personen, die sich im Bereich automatisiert gesteuerter Antriebe aufhalten. Aus diesem Grund besitzen moderne technische Anlagen über die genannten Komponenten für die Steuerung des eigentlichen Betriebsablaufs hinaus zusätzliche sicherheitstechnische Komponenten, die Sicherheitsfunktionen zum Schutz vor Gefährdungen ausführen. Ein klassisches Beispiel sind ein oder mehrere räumlich verteilte Not-Aus-Schalter, bei deren Betätigung die Anlage unmittelbar in einen gefährdungslosen Zustand versetzt wird. Typische weitere Sicherheitsgeber sind Schutztüren/Schutzzäune, Lichtschranken und Lichtgitter, aber auch Sensoren, die typische Prozessgrößen wie Drehzahlen, Spannungen oder Drücke messen. Die Ausgangssignale derartiger Sicherheitsgeber sind bei heutigen technischen Anlagen in aller Regel einer speziellen Sicherheitssteuerung und/oder speziellen Sicherheitsschaltgeräten zugeführt, die zusätzlich zu den Steuerungskomponenten für den vorgesehenen Betriebsablauf installiert sind. Anders ausgedrückt sind die sicherheitstechnischen Steuerkreise in aller Regel getrennt von den Betriebssteuerkreisen realisiert. Diese Trennung besitzt den Vorteil, dass eine Änderung im Bereich der Betriebssteuerung der Anlage keinen sicherheitsgefährdenden Einflluss auf die Sicherheitskreise der Anlage nehmen kann.

Andererseits müssen der Betriebssteuerkreis und der Sicherheitskreis in irgendeiner Weise verknüpft werden, um bei Auftreten einer Gefahrensituation die Anlage zuverlässig abschalten zu können. Für diese Verknüpfung sind in der Praxis bislang zwei Alternativen bekannt. Ein erster Ansatz besteht darin, mit dem Sicherheitskreis bei Auftreten einer Gefahrensituation die Stromversorgung der von der Betriebssteuerung angesprochenen E/A-Einheit abzuschalten. Damit werden zwangsläufig sämtliche Ausgangssignale der E/A-Einheit abgeschaltet. Die E/A-Einheit kann folglich auch die angeschlossenen Aktoren nicht mehr antreiben. Nachteil dieses Verfahrens ist es, dass die übergeordnete Betriebssteuerung beim Abschalten der Anlage Fehlermeldungen aufgrund des "Wegfalls" der E/A-Einheit erhält. Diese Fehlermeldungen können die erneute Inbetriebnahme der Anlage verzögern. Darüber hinaus erfordert diese Art der Kopplung einen gewissen Verkabelungsaufwand.

Ein alternatives Konzept besteht darin, in der ausgangsseitigen Verbindung zwischen E/A-Einheit und angetriebenem Aktor ein weiteres Schaltelement (in aller Regel Schütze) anzuordnen. Das weitere Schaltelement wird dann vom Sicherheitskreis betätigt und kann den Aktor abschalten, ohne der E/A-Einheit die Stromversorgung zu nehmen. Auch diese Art der Anbindung erfordert jedoch einen gewissen zusätzlichen Verkabelungsaufwand.

Als dritte Möglichkeit zur Kopplung von Betriebskreis und Sicherheitskreis kommt in Betracht, die Steuerbefehle des Betriebskreises durch die Steuereinheit des Sicherheitskreises zu schleusen. Die Steuereinheit des Sicherheitskreises hat damit die Möglichkeit, bei Auftreten einer Gefahrensituation die Kommunikation zwischen Betriebssteuerung und E/A-Einheit zu unterbrechen bzw. Steuerbefehle der Betriebssteuerung zu überstimmen. Dieser Ansatz besitzt jedoch den Nachteil, dass sich die Kommunikation zwischen Betriebssteuerung und E/A-Einheit aufgrund der zwischengeschalteten Sicherheitssteuerung verzögert. Die Reaktionsschnelligkeit der Betriebssteuerung wird damit herabgesetzt.

Die eingangs genannte EP 0 155 213 A1 offenbart eine Vorrichtung mit einer Steuereinheit und einer Überwachungseinheit, die gemeinsam mit einer E/A-Einheit verbunden sind, um über die E/A-Einheit einen oder mehrere Aktoren anzutreiben. In der E/A-Einheit findet eine UND-Verknüpfung statt, so dass der Aktor nur angesteuert wird, wenn beide Einheiten einen insoweit übereinstimmenden Steuerbefehl an die E/A-Einheit senden. Eine Rückmeldung über den Zustand des Aktors kann lediglich die Überwachungseinheit erhalten, die mit der E/A-Einheit über einen Datenbus verbunden ist.

Vor diesem Hintergrund ist es eine Aufgabe der vorliegenden Erfindung, ein alternatives Konzept anzugeben, um bei einer Vorrichtung der eingangs genannten Art konventionelle Steuervorgänge (Betriebssteuerung) und sicherheitsgerichtete Steuervorgänge miteinander zu verknüpfen.

Diese Aufgabe wird gemäß einem Aspekt der vorliegenden Erfindung durch eine Vorrichtung nach Anspruch 1 und eine E/A-Einheit nach Anspruch 13 gelöst.

Das neue Konzept beruht auf der Idee, eine spezielle E/A-Einheit zur Verfügung zu stellen, die aufgrund einer internen Verknüpfungs- oder Verarbeitungslogik in der Lage ist, Steuerbefehle von einer ersten Steuereinheit (Betriebssteuereinheit) zu verarbeiten und zusätzlich und gleichzeitig unter Kontrolle einer zweiten Steuereinheit Sicherheitsfunktionen auszuführen. Damit stellt die neue E/A-Einheit eine Komponente dar, die sowohl von einer Betriebssteuerung als auch von einer Sicherheitssteuerung angesprochen wird. Anders ausgedrückt ist die neue E/A-Einheit eine Baugruppe, die sowohl dem Betriebssteuerkreis als auch dem Sicherheitskreis angehört, so dass die bislang praktizierte Trennung von Betriebskreis und Sicherheitskreis an dieser Stelle aufgegeben ist.

Im einfachsten Fall führt die neue E/A-Einheit eine UND-Verknüpfung der Art durch, dass ein Aktor jeweils nur dann in Betrieb sein und genommen werden kann, wenn von keiner der beiden Steuereinheiten ein Stopp-Befehl vorliegt. Anders ausgedrückt sind die Steuerbefehle der Sicherheitssteuerung (der zweiten Steuereinheit in der Terminologie der vorliegenden Anmeldung) eine Art Freigabesignal, welches den Steuerbefehlen der Betriebssteuerung (erste Steuereinheit) überlagert wird. Die neue E/A-Einheit besitzt eine interne Verarbeitungslogik, die in der Lage ist, Betriebssteuerbefehl und Freigabesignal zu verknüpfen. Damit erhält sie eine bei bislang bekannten E/A-Einheiten nicht erforderliche und nicht vorhandene Intelligenz.

Das neue Konzept besitzt den Vorteil, dass der Verkabelungsaufwand gegenüber den oben beschriebenen Konzepten deutlich reduziert ist. Des Weiteren können zusätzliche externe Sicherheitsschaltelemente entfallen, was auch die Bauteilkosten reduziert. Da die Verknüpfung von Betriebssteuerung und Sicherheitsfunktionen andererseits "im Feld", d.h. in der dezentral angeordneten E/A-Einheit, erfolgt, wird die Betriebssteuerung der Anlage allenfalls geringfügig verzögert.

Die E/A-Einheit ist hier eine Baugruppe, die bereits von sich aus die im Bereich der Sicherheitstechnik geforderten Kriterien erfüllt. "Fehlersicher" bedeutet hier insbesondere, dass die E/A-Einheit zumindest die Kategorie 3, bevorzugt sogar die Kategorie 4, der europäischen Norm EN 954-1 oder eine vergleichbare Sicherheitsnorm erfüllt. Diese Ausgestaltung besitzt den Vorteil, dass der Verkabelungsaufwand und die Kommunikation zwischen der E/A-Einheit und der zweiten Steuereinheit (Sicherheitssteuerung) reduziert bzw. vereinfacht werden kann, da die zweite Steuereinheit hiernach auf die Eigenfehlersicherheit der E/A-Einheit vertrauen kann.

Schließlich weist die E/A-Einheit zumindest einen Eingangsanschluss zum Anschließen eines Meldegerätes auf, wobei der Eingangsanschluss parallel sowohl von der ersten Steuereinheit als auch von der zweiten Steuereinheit adressierbar ist. "Adressierbar" bedeutet auch in diesem Zusammenhang, dass sowohl die erste als auch die zweite Steuereinheit den genannten Eingangsanschluss ansprechen können. Bei einer SPS heißt dies konkret, dass der entsprechende Eingangsanschluss im Prozessabbild der Eingänge für beide Steuereinheiten enthalten ist. Dadurch sind beide Steuereinheiten in der Lage, ein am Eingangsanschluss anliegendes Sensorsignal einzulesen. Die parallele Adressierbarkeit trägt zu einem weiter vereinfachten Installationsaufwand bei. Des Weiteren können am Meldegerät bzw. Sensor zusätzliche Kontakte eingespart werden, und es kann auch eine Parallelverdrahtung entfallen, ohne dass einer der Steuereinheiten die entsprechende Eingangsinformation vorenthalten bleiben muss.

Insgesamt ermöglicht das neue Konzept damit eine kostengünstige und effiziente Kopplung zwischen Betriebssteuerkreis und Sicherheitskreis einer technischen Anlage. Die oben genannte Aufgabe ist damit vollständig gelöst.

Dabei ist die zweite Steuereinheit fehlersicher (im Sinne der Kategorie 3 oder höher der EN 954-1 oder im Sinne einer vergleichbaren Sicherheitsstufe, also zumindest einfehlersicher) ausgebildet. Bevorzugt ist die erste Steuereinheit demgegenüber eine Standard-Steuereinheit, die also keine hinreichende Fehlersicherheit zum Steuern von sicherheitskritischen Vorgängen gewährleistet.

Durch diese Ausgestaltung wird die Trennung von sicherheitsrelevanten Steuerabläufen und betriebsmäßigen Steuerabläufen trotz der erfindungsgemäßen Zusammenführung in der E/A-Einheit weitgehend beibehalten. Dadurch können bewährte Sicherheitskonzepte mit geringem Aufwand übernommen werden und es ist möglich, bestehende Anlagen kostengünstig nach- oder umzurüsten. In einer weiteren Ausgestaltung weist die E/A-Einheit zumindest ein Ausgangsschaltelement zum Antreiben des Aktors sowie einen Rückführkreis auf, mit dessen Hilfe ein Betriebszustand des Ausgangsschaltelements bestimmbar ist.

Diese Ausgestaltung kann alternativ oder bevorzugt in Ergänzung oder als Bestandteil der zuvor genannten Ausgestaltung realisiert sein. Sie ermöglicht es, den jeweiligen Schaltzustand des Ausgangsschaltelements und damit verbunden den Betriebszustand des angetriebenen Aktors regelmäßig oder sogar laufend zu überwachen. Insbesondere ist es damit bei redundanten Ausgangsschaltelementen möglich, ein Wiedereinschalten der überwachten Anlage zu unterbinden, wenn zwar ein Abschaltvorgang aufgrund von einem Ausgangsschaltelement erfolgreich war, ein anderes Schaltelement jedoch fehlerhaft ist. Die Integration des Rückführkreises in die neue E/A-Einheit trägt zu einer noch weiteren Reduzierung des Installationsaufwandes bei. Dies macht die Installation noch einfacher und kostengünstiger. Zudem kann dann allein mit Hilfe der E/A-Einheit ein Wiedereinschalten der Anlage unterbunden werden, ohne dass die zweite (fehlersichere) Steuereinheit involviert sein muss. Dies ist vor allem dann von Vorteil, wenn ein Abschaltvorgang von der ersten (Betriebs-) Steuerung ausgelöst wird, da ein solcher Abschaltvorgang der zweiten Steuereinheit dann nicht "mitgeteilt" werden muss.

In einer weiteren Ausgestaltung weist die E/A-Einheit einen Kopfteil mit der ersten und zweiten Schnittstelle sowie einen E/A-Teil mit einer Vielzahl von E/A-Modulen auf, wobei der Kopfteil dazu ausgebildet ist, mehrere E/A-Module in Abhängigkeit von den ersten und zweiten Steuerbefehlen gemeinsam anzusteuern. Bevorzugt erfolgt die gemeinsame Ansteuerung über eine logische Adressierung, die vom Kopfteil erzeugt wird und die von der räumlichen Position der einzelnen Modulsteckplätze insoweit unabhängig ist, als dass E/A-Module, die räumlich nicht unmittelbar nebeneinander liegen, gemeinsam ein- oder ausgeschaltet werden können, ohne dass dazwischen liegende E/A-Module zwangsläufig mit angesteuert werden.

Durch den modulartigen Aufbau kann die neue E/A-Einheit sehr einfach an wechselnde Anlagenanforderungen angepasst werden. Insbesondere kann eine sehr flexible Blockabschaltung von Bereichen einer größeren Anlage realisiert werden, wie dies weiter unten anhand eines bevorzugten Ausführungsbeispiels noch näher erläutert ist. Um eine maximale Flexibilität zu erreichen, sind in einer besonders bevorzugten Ausgestaltung sämtliche E/A-Module (ein-)fehlersicher ausgebildet.

In einer weiteren Ausgestaltung sind die E/A-Einheit und die zweite Steuereinheit über eine fehlersichere Kommunikationsverbindung miteinander verbunden.

Eine fehlersichere Kommunikationsverbindung in diesem Sinne ist beispielsweise der von der Anmelderin unter der Bezeichnung SaftetyBUS p® vertriebene Feldbus, der speziell für eine Vernetzung von sicherheitskritischen Komponenten entwickelt wurde. Durch die Verwendung einer solchen Kommunikationsverbindung wird die neue E/A-Einheit vollständig in den Sicherheitskreis der Anlage integriert. Bei der Installation der E/A-Einheit und auch bei der Zertifizierung durch entsprechende Aufsichtsbehörden kann daher auf bekannte und akzeptierte Verfahren zurückgegriffen werden, was zu einer weiteren Kostenreduzierung beiträgt.

In einer weiteren Ausgestaltung sind die E/A-Einheit und die erste Steuereinheit über eine nicht-fehlersichere Kommunikationsverbindung miteinander verbunden.

Diese Ausgestaltung zeigt insbesondere in Kombination mit der vorhergehenden Ausgestaltung die "Doppelnatur" der neuen E/A-Einheit. Die Anbindung dieser neuen E/A-Einheit an die erste Steuereinheit über eine nicht-fehlersichere, d.h. konventionelle, Kommunikationsverbindung vereinfacht die Integration in bekannte und bestehende Betriebssteuerkreise. Darüber hinaus ist durch diese Ausgestaltung auch die Nachrüstung von vorhandenen Anlagen vereinfacht.

In einer weiteren Ausgestaltung sind die fehlersichere Kommunikationsverbindung und die nicht-fehlersichere Kommunikationsverbindung mit Hilfe von separaten Übertragungsmedien realisiert. Insbesondere handelt es sich hierbei um separate Busverbindungen. Die separaten Kommunikationsverbindungen können in einem Kabel integriert sein oder auch mit Hilfe von zwei getrennten Kabeln realisiert sein. Die Trennung der Übertragungsmedien trägt zu einer leichteren Integration in bestehenden Anlagen bei. Die Kombination der an sich getrennten Übertragungsmedien in einem gemeinsamen Kabel, beispielsweise in Form von getrennten Adern innerhalb des Kabels, vereinfacht andererseits die Installation, insbesondere bei weitläufigen technischen Anlagen.

In einer weiteren Ausgestaltung sind die erste und die zweite Schnittstelle in Form von zwei physikalisch getrennten Anschlussmöglichkeiten realisiert.

Diese Ausgestaltung besitzt den Vorteil, dass sich die neue E/A-Einheit leichter in bestehenden Anlagen integrieren lässt. Dies gilt insbesondere, wenn dabei auch getrennte Übertragungsmedien für die Kommunikation zwischen der ersten und zweiten Steuereinheit und der E/A-Einheit zum Einsatz kommen.

In einer anderen Ausgestaltung sind die fehlersichere Kommunikationsverbindung und die nicht-fehlersichere Kommunikationsverbindung mit Hilfe eines gemeinsamen Übertragungsmediums realisiert. Dabei ist es bevorzugt, wenn die erste und zweite Schnittstelle als logisch getrennte Schnittstellen mit gemeinsamer Hardware realisiert sind.

In dieser Ausgestaltung können die beiden Steuereinheiten beispielsweise über eine gemeinsame Ethernet- oder Profibus-Verbindung mit der E/A-Einheit verbunden sein. Aufgabe der logisch getrennten Schnittstellen ist es dann, die über das gemeinsame Übertragungsmedium erhaltenen Telegramme zu trennen und innerhalb der E/A-Einheit jeweils den richtigen Untereinheiten, vor allem den richtigen Speichern, zuzuordnen. Der Vorteil dieser Ausgestaltung ist die noch einfachere und kostengünstigere Realisierung von neuen Anlagen, da der Materialaufwand bei einer physikalisch kombinierten Schnittstelle geringer ist.

In der Ausgestaltung weist die E/A-Einheit zumindest einen Ausgangsanschluss zum Anschließen des Aktors auf, wobei der Ausgangsanschluss parallel sowohl von der ersten Steuereinheit als auch von der zweiten Steuereinheit adressierbar ist. "Adressierbar" bedeutet in diesem Zusammenhang, dass sowohl die erste als auch die zweite Steuereinheit den entsprechenden Ausgangsanschluss ansprechen können. Bei einer SPS heißt dies konkret, dass der entsprechende Ausgangsanschluss im Prozessabbild der Ausgänge für beide Steuereinheiten enthalten ist. Damit ist jede der beiden Steuereinheiten für sich in der Lage, den angeschlossenen Aktor zu deaktivieren, so dass die Betriebssteuerung an sich unabhängig von der Sicherheitsfunktion ablaufen kann. Dadurch wird die Integration der neuen E/A-Einheit in den Betriebssteuerkreis noch weiter vereinfacht.

In einer weiteren Ausgestaltung weist die E/A-Einheit zumindest einen weiteren Eingangsanschluss zum Anschließen eines weiteren Meldegerätes auf, wobei der weitere Eingangsanschluss nur von der ersten Steuereinheit oder nur von der zweiten Steuereinheit adressierbar ist.

Diese Ausgestaltung stellt dedizierte Eingänge zur Verfügung, über die sich Informationen ganz gezielt nur an jeweils eine der Steuereinheiten übermitteln lassen. Vorteil ist, dass sich hierüber gewissermaßen eine "geheime" bzw. abgeschottete Kommunikation zwischen der jeweils befugten Steuereinheit und der E/A-Einheit auf einfache Weise realisieren lässt. Infolge dessen kann die bewährte Trennung von Sicherheitskreis und Standardkreis zuverlässiger beibehalten werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein vereinfachtes Blockschaltbild einer neuen Vorrichtung zum automatisierten Steuern einer technischen Anlage,
- Fig. 2: ein vereinfachtes Blockschaltbild einer neuen E/A-Einheit in der Vorrichtung aus Fig. 1, und
- Fig. 3: eine modulartige E/A-Einheit gemäß einem Ausführungsbeispiel der Erfindung.

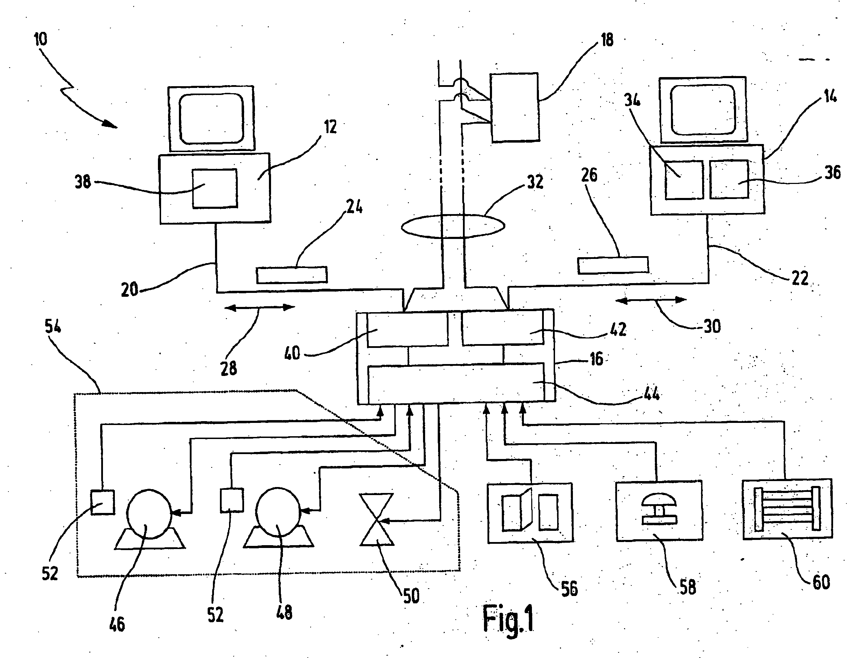

In Fig. 1 ist ein Ausführungsbeispiel der neuen Vorrichtung in seiner Gesamtheit mit der Bezugsziffer 10 bezeichnet.

Die Vorrichtung 10 besitzt eine erste Steuereinheit 12, eine zweite Steuereinheit 14 sowie zwei beispielhaft dargestellte E/A-Einheiten 16 und 18. Die erste Steuereinheit 12 ist mit den beiden E/A-Einheiten 16, 18 über einen ersten Feldbus 20 verbunden. Die zweite Steuereinheit 14 ist mit den beiden E/A-Einheiten 16, 18 über einen zweiten Feldbus 22 verbunden. Die Steuereinheiten 12, 14 können mit den E/A-Einheiten 16, 18 über die Feldbusse 20, 22 Nachrichten in Form von so genannten Bustelegrammen austauschen, die in Fig. 1 bei den Bezugsziffern 24, 26 angedeutet sind. Die Bustelegramme 24, 26 transportieren Steuerbefehle von den Steuereinheiten 12, 14 zu den E/A-Einheiten 16, 18 und in umgekehrter Richtung Daten und Zustandsmeldungen von den E/A-Einheiten 16, 18 zu den Steuereinheiten 12, 14. Diese bidirektionale Kommunikation ist in Fig. 1 an Hand der Pfeile 28, 30 dargestellt.

Die beiden Feldbusse 20, 22 sind in einem Ausführungsbeispiel an sich bekannte Bustechnologien. Beispielsweise ist der Feldbus 20 ein standardmäßiger CAN-Bus oder auch ein Profibus oder Interbus. Der Feldbus 22 ist in der bevorzugten Ausführung demgegenüber ein Feldbus speziell für sicherheitskritische Anwendungen, wie insbesondere der unter der Bezeichnung SafetyBUS p® bekannte Bus der Anmelderin der vorliegenden Erfindung. Grundsätzlich ist die Erfindung jedoch nicht auf diese speziellen Kommunikationsmedien beschränkt, d.h. die E/A-Einheiten 16, 18 können grundsätzlich auch auf andere Weise mit den Steuereinheiten 12 und 14 in Verbindung stehen, beispielsweise über eine gemeinsame Ethernetverbindung oder einen gemeinsamen Profibus.

In einem besonderen Ausführungsbeispiel sind die beiden Feldbusse 20, 22 unter Verwendung eines einzigen Kabels realisiert, das von den Steuereinheiten 12, 14 zu den E/A-Einheiten 16, 18 verlegt ist. Dies ist in Fig. 1 bei der Bezugsziffer 32 symbolisiert. Die Erfindung ist jedoch auch auf diese Ausführung nicht beschränkt, d.h. die beiden Feldbusse 20, 22 könnten auch mit getrennten Kabeln und mit gänzlich unterschiedlichen Übertragungsmedien realisiert sein.

Die zweite Steuereinheit 14 ist hier eine fehlersichere Steuereinheit im Sinne der Kategorie 4 der europäischen Norm EN 954-1. Sie ist dementsprechend mit einem mehrkanalig-redundanten Aufbau dargestellt, der hier stellvertretend für die übrigen Komponenten mit zwei getrennten Prozessoren 34, 36 symbolisiert ist. In einem bevorzugten Ausführungsbeispiel handelt es sich um eine fehlersichere SPS, wie sie von der Anmelderin der vorliegenden Erfindung unter der Bezeichnung PSS® angeboten wird.

Demgegenüber ist die erste Steuereinheit 12 hier eine standardmäßige Steuereinheit, konkret eine Standard-SPS. Dies ist in Fig. 1 stellvertretend für die anderen Komponenten mit Hilfe eines einzelnen Prozessors 38 symbolisiert.

Die E/A-Einheiten 16, 18 besitzen gemäß einem Aspekt der vorliegenden Erfindung eine erste Schnittstelle 40 und eine zweite Schnittstelle 42 (hier der Einfachheit halber nur für die E/A-Einheit 16 dargestellt). In einem bevorzugten Ausführungsbeispiel sind die beiden Schnittstellen 40, 42 in Form von physikalisch getrennten Anschlussmöglichkeiten realisiert, und zwar hier einmal als Standardschnittstelle zum Anschluss an den handelsüblichen Feldbus 20 sowie als Schnittstelle zum Anschluss an den SafetyBUS p® 22 der Anmelderin.

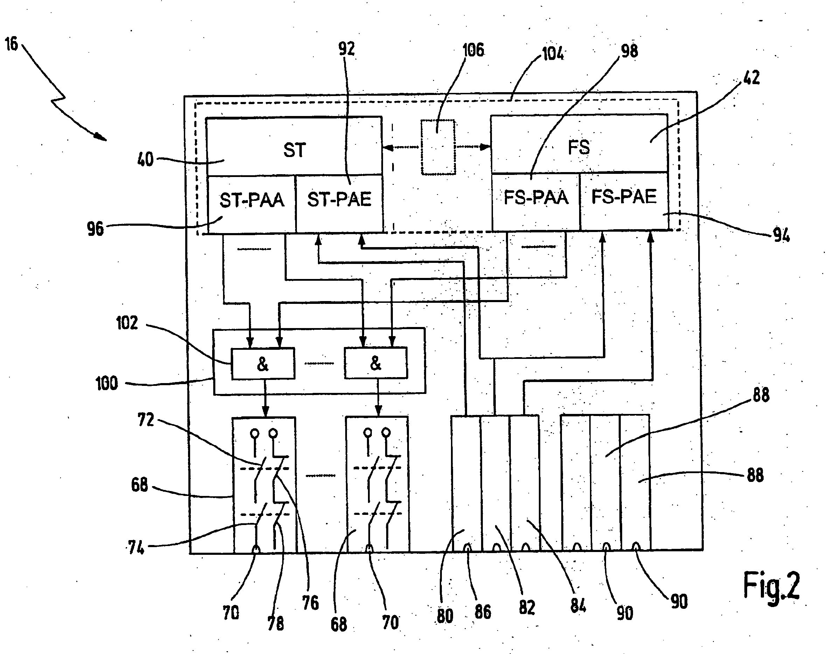

Mit der Bezugsziffer 44 ist ein Verarbeitungs- und Ausgangskreis der E/A-Einheit 16 bezeichnet, der nachfolgend an Hand Fig. 2 noch näher erläutert wird.

Ausgangsseitig sind hier an die E/A-Einheit 16 beispielhaft zwei Antriebe 46, 48 sowie ein Ventil 50 angeschlossen. Zu jedem der Antriebe 46, 48 gehört ein Drehzahlsensor 52, der ebenfalls an die E/A-Einheit 16 angeschlossen ist. Die Antriebe 46, 48, das Ventil 50 und die Sensoren 52 sind Bestandteil einer technischen Anlage, die hier in ihrer Gesamtheit mit der Bezugsziffer 54 bezeichnet ist. Beispielsweise handelt es sich um einen automatisiert arbeitenden Roboter, eine Transport- oder Förderanlage, eine Pressenstraße oder um eine andere automatisiert arbeitende technische Anlage.

Der vorgesehene Betriebsablauf der Anlage 54 wird anschließend vollständig mit Hilfe der Steuereinheit 12 realisiert, die die Aktoren 46-50 über die E/A-Einheit 16 anspricht und umgekehrt Prozessgrößen mit Hilfe der Sensoren 52 einliest. Da von einer derartig automatisiert arbeitenden Anlage grundsätzlich eine Gefahr ausgeht, sind im Bereich von Gefährdungsstellen Sicherheitsmaßnahmen installiert. Typische Beispiele beinhalten die Absicherung der Anlage mit Hilfe von Schutzgittern und Schutztüren 56, das Anordnen von Not-Aus-Schaltern 58 an neuralgischen Punkten sowie die Verwendung von Lichtschranken, Lichtgittern oder Laserscannern 60. Diese Sicherheitsgeber 56-60 sind hier ebenfalls an die E/A-Einheit 16 angeschlossen. Die zweite Steuereinheit 14 liest die von den Sicherheitsgebern 56-60 gelieferten Signale ein, wertet diese aus und erzeugt in Abhängigkeit davon Steuerbefehle, mit denen die Aktoren 46-50 gegebenenfalls so betätigt werden, dass die Anlage 54 in einen gefahrlosen Zustand überführt wird. Abweichend von bisherigen Konzepten ist es aufgrund der neuen E/A-Einheit 16 hier allerdings nicht mehr erforderlich, separate Schütze zum Abschalten der Aktoren 46-50 vorzusehen, da die zweite Steuereinheit 14 über die neue E/A-Einheit 16 unmittelbar auf die Aktoren 46-50 der Anlage 54 zugreifen kann. Vorteilhaft ist hier, dass die zweite Steuereinheit 14 darüber hinaus auch die Signale der Sensoren 52 einlesen und auswerten kann, um beispielsweise einzelne Antriebe 46, 48 bei Wartungs- oder Einrichtarbeiten mit einer reduzierten Geschwindigkeit zu betreiben. Der Betrieb mit reduzierter Geschwindigkeit kann von der Betätigung eines Zustimmschalters (hier nicht dargestellt) abhängig gemacht werden, der ebenfalls ein sicherheitskritisches Meldegerät darstellen würde.

Fig. 2 zeigt in einem schematischen Blockschaltbild wesentliche Bestandteile der neuen E/A-Einheit 16, wobei gleiche Bezugszeichen dieselben Elemente bedeuten wie bisher.

Die E/A-Einheit 16 besitzt eine Reihe von Ausgangsschaltkreisen 68, die jeweils einen Ausgangsanschluss 70 aufweisen. An die Ausgangsanschlüsse 70 werden die Aktoren 46, 48, 50 angeschlossen. In bevorzugten Ausführungsbeispielen ist vorgesehen, dass zumindest einige der Ausgangsschaltkreise 68 Hochstromausgänge bereitstellen, so dass auch größere Lasten direkt von der E/A-Einheit 16 angesteuert werden können. Abweichend hiervon ist es jedoch grundsätzlich auch möglich, mit den Ausgängen 70 der E/A-Einheit 16 Schütze zu treiben, über die dann die eigentlichen Aktoren ein- oder ausgeschaltet werden.

In dem hier dargestellten, bevorzugten Ausführungsbeispiel sind die Ausgangsschaltkreise 68 jeweils mehrkanalig-redundant aufgebaut, und sie besitzen zudem einen internen Rückführkreis. In Fig. 2 ist dies an Hand von jeweils zwei in Reihe zueinander angeordneten Schließerkontakten 72, 74 dargestellt, die jeweils mit einem zwangsgeführten Öffnerkontakt 76, 78 gekoppelt sind. Die öffnerkontakte 76, 78 sind typischerweise in einem Rückführkreis angeordnet, der aufgrund der zwangsgeführten Kopplung eine Aussage über die Schaltstellung der Schließerkontakte 72, 74 ermöglicht. Eine derartige Verschaltung von öffner- und Schließerkontakten ist den einschlägigen Fachleuten auf dem Gebiet der Sicherheitstechnik hinreichend bekannt. Abweichend von der hier der Einfachheit halber gewählten Darstellung können die Ausgangsschaltkreise 68 der E/A-Einheit 16 jedoch auch in Halbleitertechnik realisiert sein, wobei Rückführkreise dann beispielsweise mit Hilfe von Optokopplern realisiert sind. In jedem Fall erfolgt die Ansteuerung der Aktoren 46-50 hier jedoch über fehlersichere Ausgangsschaltkreise 68, die direkt in der neuen E/A-Einheit 16 implementiert sind.

Mit den Bezugsziffern 80, 82, 84 sind drei beispielhaft dargestellte Eingangskreise der E/A-Einheit 16 bezeichnet. Die Eingangskreise 80-84 besitzen jeweils einen Anschluss 86 zum Anschließen von Sensoren 52 und/oder Sicherheitsgebern 56-60. In dem hier dargestellten Ausführungsbeispiel ist der Eingangskreis 80 derartig ausgebildet, dass er nur von der ersten Steuereinheit 12 adressiert werden kann. Dementsprechend kann ein am Eingangskreis 80 angeschlossener Sensor nur von der ersten Steuereinheit 12 aus gelesen werden. Der Eingangskreis 82 kann demgegenüber sowohl von der ersten Steuereinheit 12 als auch der zweiten Steuereinheit 14 adressiert werden, so dass ein hieran angeschlossener Sensor von beiden Steuereinheiten aus gelesen werden kann. Der Eingangskreis 84 kann demgegenüber nur von der zweiten Steuereinheit 14 aus gelesen werden. Es versteht sich, dass eine beliebige Kombination der Eingangskreise 80, 82, 84 möglich ist, wobei der Eingangskreis 82, der von beiden Steuereinheiten adressiert werden kann, grundsätzlich bevorzugt ist.

Mit der Bezugsziffer 88 sind weitere Ausgangskreise bezeichnet, die insbesondere verschiedene Taktsignale an entsprechenden Anschlüssen 90 liefern. Derartige Taktsignale werden im Bereich der Sicherheitstechnik beispielsweise verwendet, um eine Querschlusserkennung zwischen zwei Leitungen zu realisieren.

Die beiden Schnittstellen 40, 42 besitzen jeweils einen Eingangsspeicher 92, 94 und einen Ausgangsspeicher 96, 98. Die Eingangsspeicher und Ausgangsspeicher enthalten, wie es für SPS-basierte Steuerungssysteme üblich ist, ein Prozessabbild aller Eingänge (Signalzustände an den Eingangsanschlüssen 86) bzw. ein Prozessabbild aller Ausgänge (Signalzustände an den Ausgangsanschlüssen 70, 90). Die erste Steuereinheit 12 kann über die Schnittstelle 40 die Prozessabbilder der Ein- und Ausgänge aus den Speichern 92, 96 einlesen und beeinflussen, während die zweite Steuereinheit 14 die Prozessabbilder in den Speichern 94, 98 einlesen bzw. beeinflussen kann.

Mit der Bezugsziffer 100 ist ein Logikteil bezeichnet, der hier mit einer Vielzahl von UND-Verknüpfungsgliedern 102 dargestellt ist. In der praktischen Realisierung kann der Logikteil 100 mit Hilfe von (Signal-)Prozessoren, Mikrocontrollern oder auch als FPGA oder ASIC realisiert sein. Der Logikteil 100 ist hier mehrkanalig-redundant aufgebaut, um eine fehlersichere Signalverarbeitung im Sinne der Kategorie 4 der EN 954-1 zu ermöglichen. Die Ausgänge der einzelnen UND-Verknüpfungsglieder 102 sind jeweils einem Ausgangsschaltkreis 68 zugeführt. Eingangsseitig sind die UND-Verknüpfungsglieder 102 einerseits mit dem Ausgangsspeicher 96 und andererseits mit dem Ausgangsspeicher 98 verbunden. Mit Hilfe der UND-Verknüpfungsglieder werden somit die Steuerbefehle der ersten und zweiten Steuereinheit 12 bzw. 14 verknüpft und in Form eines verknüpften Steuersignals an die einzelnen Ausgangsschaltkreise 68 weitergegeben. Im einfachsten Fall übernimmt die zweite Steuereinheit 14 dabei die Funktion eines Freigabe- oder Zustimmelements, das es durch Bereitstellen eines entsprechenden Datenwertes im Ausgangsspeicher 98 ermöglicht, dass die erste Steuereinheit 12 über die Ausgangsschaltkreise 68 die angeschlossenen Aktoren ansteuern kann. Dabei erfolgt die Auswertung der sicherheitsrelevanten sensorsignale allerdings exklusiv in der zweiten Steuereinheit. Erkennt die zweite Steuereinheit 14 einen Gefahrenzustand, beispielsweise aufgrund der Betätigung eines der Sicherheitsgeber 56-60 oder aufgrund eines Selbsttests, sperrt sie über einen entsprechenden Datenwert im Ausgangsspeicher 98 den Zugriff der ersten Steuereinheit 12 auf die Ausgangsschaltkreise 68. Durch die UND-Verknüpfung im Logikteil 100 werden damit die Ausgangsschaltelemente 72, 74 in den Ausgangsschaltkreisen 68 geöffnet. Die Aktoren 46-50 werden abgeschaltet. Darüber hinaus kann die zweite Steuereinheit 14 abweichend von diesem typischen Fall auch andere Maßnahmen auslösen, um einen gefahrlosen Anlagenzustand zu erreichen. Beispielsweise kann eine Abschaltung der Antriebe 46, 48 erst mit einer gewissen Zeitverzögerung erfolgen, um bewegte Lasten zunächst in eine sichere Parkposition zu fahren. Zu diesem Zweck kann die zweite Steuereinheit 14 die erste Steuereinheit 12 informieren, dass eine Abschaltung der Antriebe erforderlich ist. Erst nach Ablauf einer festgelegten Zeitspanne schaltet die zweite Steuerung 14 die Stromversorgung der Antriebe 46, 48 dann mit Hilfe der E/A-Einheit 16 ab.

In einer besonderen Ausführung sind die beiden Schnittstellen 40, 42 der neuen E/A-Einheit mit gemeinsamer Hardware als allein logisch getrennte Schnittstellen realisiert. Dies ist in Fig. 2 symbolisch durch den Kasten 104 angedeutet. Konkret handelt es sich hier beispielsweise um eine Schnittstellenhardware für einen Ethernet-Anschluß. Ein Zuordnungskreis, der bevorzugt in Form einer geeigneten Adressauswertungssoftware 106 realisiert ist, ordnet die erhaltenen und zu versendenden Telegramme 24, 26 jeweils der gewünschten Steuereinheit bzw. dem zugehörigen Speicher 92, 96 bzw. 94, 98 zu. In dieser Ausführung kann die neue E/A-Einheit dann über ein gemeinsames Ethernetkabel (oder ein anderes leitungsgebundenes oder drahtloses Übertragungsmedium) an die beiden Steuereinheiten 12, 14 angeschlossen werden.

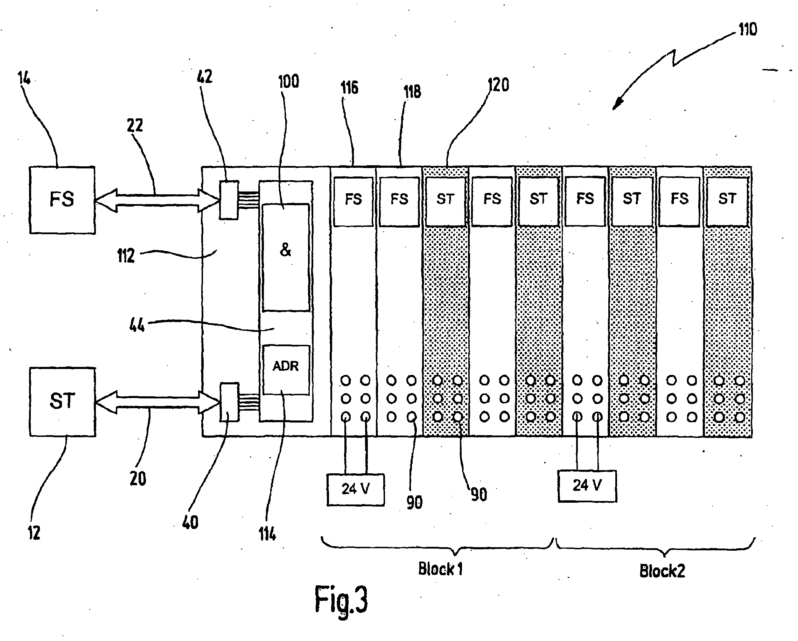

Fig. 3 zeigt in einer vereinfachten Darstellung den konzeptionellen Aufbau einer bevorzugten modularen E/A-Einheit 110 nach der vorliegenden Erfindung. Gleiche Bezugszeichen bezeichnen dabei dieselben Elemente wie zuvor.

Die E/A-Einheit 110 besitzt ein Kopfteil 112 mit den Schnittstellen 40, 42 und dem Verarbeitungsteil 44. Der Verarbeitungsteil 44 beinhaltet hier zu dem Logikteil 100 noch eine Adressumsetzung 114, die auch Bestandteil des Logikteils 100 sein kann. An das Kopfteil reihen sich Modulsteckplätze, in die E/A-Module 116, 118, 120 wahlweise einsetzbar sind. Die E/A-Module beinhalten die Eingangskreise und Ausgangskreise 68, 80, 82, 84, 88 gemäß der funktionalen Beschreibung aus Fig. 2. Sie können unterschiedlich aufgebaut sein, also beispielsweise reine Eingangsmodule oder reine Ausgangsmodule, oder auch alle zuvor beschriebenen Funktionen beinhalten.

In einem besonders bevorzugten Ausführungsbeispiel sind alle E/A-Module 116, 118, 120 fehlersicher aufgebaut. Gleichwohl ist das E/A-Modul 120 hier zum Anschluss von Standardkomponenten vorgesehen, die in den Betriebssteuerkreis eingebunden sind, wie etwa die Aktoren 46, 48, 50 und die Sensoren 52 aus Fig. 2, und die nach konventionellem Konzept nur über ein nichtfehlersicheres Standardmodul angeschlossen würden. Das E/A-Modul 116 ist ein fehlersicheres Modul und es besitzt hier als Besonderheit noch eine Einspeisung für eine Betriebsspannung für die E/A-Module 116 - 120. Alternativ könnte die Betriebsspannungseinspeisung jedoch auch vom Kopfteil 112 erfolgen oder es könnte jedes E/A-Modul eine Betriebsspannungseinspeisung besitzen. Das E/A-Modul 118 ist ein fehlersicheres E/A-Modul, das über die Betriebsspannungseinspeisung des Moduls 116 mit versorgt wird. In einem besonders bevorzugten Ausführungsbeispiel sind die E/A-Module 116, 118 für den Sicherheitskreis farblich gegenüber dem Modul 120 für den Standardkreis abgesetzt.

Die Adressumsetzung 114 ist dazu ausgebildet, die einzelnen E/A-Module 116, 118, 120 wahlweise anzusprechen, um die von den Steuereinheiten 12, 14 kommenden Steuerbefehle weiterzuleiten. Dabei wird die logische Verknüpfung zwischen Standardteil und Sicherheitsteil, bspw. in Form der erläuterten UND-Verknüpfung, berücksichtigt. Durch diese Adressumsetzung im Kopfteil 112 kann auf einfache Weise aus eine Blockabschaltung von dezentraler Stelle erreicht werden, d.h. es können mehrere E/A-Module gleichzeitig fehlersicher abgeschaltet werden.

In einem besonders bevorzugten Ausführungsbeispiel sind die blockweise adressierbaren E/A-Module nebeneinander gruppiert. Im gezeigten Ausführungsbeispiel beginnt jede dieser Gruppen mit einem fehlersicheren E/A-Modul mit einer Betriebsspannungseinspeisung.

## Patentansprüche

1. Vorrichtung zum automatisierten Steuern eines Betriebsablaufs bei einer technischen Anlage (54), mit
- einer ersten Steuereinheit (12) zum Erzeugen von ersten Steuerbefehlen (24), die dazu ausgelegt sind, den Betriebsablauf zu bewirken,
- einer zweiten Steuereinheit (14) zum Erzeugen von zweiten Steuerbefehlen (26), die dazu ausgelegt sind, Sicherheitsfunktionen auszuführen,
- zumindest einem zu steuernden Aktor (46, 48, 50), und
- einer von der ersten und der zweiten Steuereinheit (12, 14) abgesetzten E/A-Einheit (16), die zumindest teilweise als fehlersichere Baugruppe ausgebildet ist und den Aktor (46, 48, 50) antreibt,
wobei die E/A-Einheit (16) über eine erste Schnittstelle (40) mit der ersten Steuereinheit (12) und über eine zweite Schnittstelle (42) mit der zweiten Steuereinheit (14) verbunden ist,
und wobei die E/A-Einheit (16) dazu ausgebildet ist, den Aktor (46, 48, 50) abhängig von den ersten und den zweiten Steuerbefehlen (24, 26) über einen direkt in der E/A-Einheit (16) implementierten Ausgangsschaltkreis (68) anzutreiben, wozu die E/A-Einheit (16) eine interne Verarbeitungslogik (100) besitzt, die in der Lage ist, einen Betriebssteuerbefehl von der ersten Steuereinheit (12) und einen zweiten Steuerbefehl (26) von der zweiten Steuereinheit (14) zu verknüpfen, wobei der zweite Steuerbefehl (26) ein Freigabesignal ist, welches dem Betriebssteuerbefehl überlagert wird, so dass der Aktor (46, 48, 50) nur in Betrieb sein kann, wenn von keiner der beiden Steuereinheiten (12, 14) ein Stoppbefehl vorliegt, und
wobei die zweite Steuereinheit (14) fehlersicher ausgebildet ist und wobei die erste Steuereinheit (12) eine Standard-Steuereinheit ist,
**dadurch gekennzeichnet, dass** die E/A-Einheit (16) in dem Ausgangsschaltkreis (68) mehrkanalig-redundante Ausgangsschaltelemente (72, 74) zum Antreiben des Aktors (46, 48, 50) aufweist, wobei die Verarbeitungslogik (100) ein verknüpftes Steuersignal an den Ausgangsschaltkreis (68) weitergibt, und dass die E/A-Einheit (16) zumindest einen Eingangsanschluss (86) zum Anschließen eines Meldegerätes (52, 56, 58, 60) aufweist, wobei der Eingangsanschluss (86) parallel sowohl von der ersten Steuereinheit (12) als auch von der zweiten Steuereinheit (14) adressierbar ist, so dass sowohl die erste als auch die zweite Steuereinheit (12, 14) den Eingangsanschluss (86) ansprechen können und die erste Steuereinheit (12) und die zweite Steuereinheit (14) in der Lage sind, ein am Eingangsanschluss (86) anliegendes Sensorsignal auszulesen.

2. Vorrichtung nach Anspruch 1, **dadurch gekennzeichnet, dass** die E/A-Einheit (16) zumindest ein Ausgangsschaltelement (72, 74) zum Antreiben des Aktors (46, 48, 50) sowie einen Rückführkreis (76, 78) aufweist, mit dessen Hilfe ein Betriebszustand des Ausgangsschaltelements (72, 74) bestimmbar ist.

3. Vorrichtung nach einem der Ansprüche 1 bis 2, **dadurch gekennzeichnet, dass** die E/A-Einheit einen Kopfteil (112) mit der ersten und zweiten Schnittstelle (40, 42) sowie einen E/A-Teil mit einer Vielzahl von E/A-Modulen (116, 118, 120) aufweist, wobei der Kopfteil (112) dazu ausgebildet ist, mehrere E/A-Module (116, 118, 120) in Abhängigkeit von den ersten und zweiten Steuerbefehlen (24, 26) gemeinsam anzusteuern.

4. Vorrichtung nach einem der Ansprüche 1 bis 3, **dadurch gekennzeichnet, dass** die E/A-Einheit (16) und die zweite Steuereinheit (14) über eine fehlersichere Kommunkationsverbindung (22) miteinander verbunden sind.

5. Vorrichtung nach Anspruch 4, **dadurch gekennzeichnet, dass** die E/A-Einheit (16) und die erste Steuereinheit (12) über eine nicht-fehlersichere Kommunikationsverbindung (20) miteinander verbunden sind.

6. Vorrichtung nach Anspruch 5, **dadurch gekennzeichnet, dass** die fehlersichere Kommunikationsverbindung (22) und die nicht-fehlersichere Kommunikationsverbindung (20) mit Hilfe von separaten Übertragungsmedien (20, 22) realisiert sind, insbesondere separate Busverbindungen sind.

7. Vorrichtung nach Anspruch 6, **dadurch gekennzeichnet, dass** die separaten Übertragungsmedien (20, 22) in einem gemeinsamen Kabel (32) kombiniert sind.

8. Vorrichtung nach Anspruch 4 oder 5, **dadurch gekennzeichnet, dass** die fehlersichere Kommunikationsverbindung (22) und die nicht-fehlersichere Kommunikationsverbindung (20) mit Hilfe eines gemeinsamen Übertragungsmediums (20, 22) realisiert sind, insbesondere eine gemeinsame Busverbindung beinhalten.

9. Vorrichtung nach einem der Ansprüche 1 bis 8, **dadurch gekennzeichnet, dass** die erste und zweite Schnittstelle (40, 42) als logisch getrennte Schnittstellen mit gemeinsamer Hardware (104) realisiert sind.

10. Vorrichtung nach einem der Ansprüche 1 bis 8, **dadurch gekennzeichnet, dass** die erste und zweite Schnittstelle (40, 42) in Form von zwei physikalisch getrennten Anschlussmöglichkeiten realisiert sind.

11. Vorrichtung nach einem der Ansprüche 1 bis 10, **dadurch gekennzeichnet, dass** die E/A-Einheit (16) zumindest einen Ausgangsanschluss (70) zum Anschließen des Aktors (46, 48, 50) aufweist, wobei der Ausgangsanschluss (70) parallel sowohl von der ersten Steuereinheit (12) als auch von der zweiten Steuereinheit (14) adressierbar ist.

12. Vorrichtung nach einem der Ansprüche 1 bis 11, **dadurch gekennzeichnet**, das die E/A-Einheit (16) zumindest einen weiteren Eingangsanschluss (86) zum Anschließen eines weiteren Meldegerätes (52, 56, 58, 60) aufweist, wobei der weitere Eingangsanschluss (86) nur von der ersten Steuereinheit (12) oder nur von der zweiten Steuereinheit (14) adressierbar ist.

13. E/A-Einheit, mit einer ersten Schnittstelle (40) zum Aufnehmen von ersten Steuerbefehlen (24) einer ersten Steuereinheit (12), die eine Standard-Steuereinheit ist, und mit einer zweiten Schnittstelle (42) zum Aufnehmen von zweiten Steuerbefehlen (26) einer fehlersicher ausgebildeten zweiten Steuereinheit (14), ferner mit zumindest einem Ausgang (70) zum Anschließen eines anzutreibenden Aktors (46, 48, 50), wobei die E/A-Einheit (16) zumindest teilweise als fehlersichere Baugruppe und dazu ausgebildet ist, den Aktor (46, 48, 50) abhängig von den ersten und zweiten Steuerbefehlen (24, 26) über einen direkt in der E/A-Einheit (16) implementierten Ausgangsschaltkreis (68) anzutreiben, wozu die E/A-Einheit (16) eine interne Verarbeitungslogik (100) besitzt, die in der Lage ist, einen Betriebssteuerbefehl von der ersten Steuereinheit (12) und einen zweiten Steuerbefehl (26) von der zweiten Steuereinheit (14) zu verknüpfen, wobei der zweite Steuerbefehl (26) ein Freigabesignal ist, welches dem Betriebssteuerbefehl überlagert wird, so dass der Aktor (46, 48, 50) nur in Betrieb sein kann, wenn von keiner der beiden Steuereinheiten (12, 14) ein Stoppbefehl vorliegt, **dadurch gekennzeichnet, dass** die E/A-Einheit (16) in dem Ausgangsschaltkreis (68) mehrkanalig-redundante Ausgangsschaltelemente (72, 74) zum Antreiben des Aktors (46, 48, 50) aufweist, wobei die Verarbeitungslogik (100) ein verknüpftes Steuersignal an den Ausgangsschaltkreis (68) weitergibt, und dass die E/A-Einheit (16) zumindest einen Eingangsanschluss (86) zum Anschließen eines Meldegerätes (52, 56, 58, 60) aufweist, wobei der Eingangsanschluss (86) parallel sowohl von der ersten Steuereinheit (12) als auch von der zweiten Steuereinheit (14) adressierbar ist, so dass sowohl die erste als auch die zweite Steuereinheit (12, 14) den Eingangsanschluss (86) ansprechen können und die erste Steuereinheit (12) und die zweite Steuereinheit (14) in der Lage sind, ein am Eingangsanschluss (86) anliegendes Sensorsignal auszulesen.

## Claims

1. Apparatus for automatically controlling an operating procedure in a technical installation (54), having
- a first control unit (12) for generating first control commands (24) which are designed to effect the operating procedure,
- a second control unit (14) for generating second control commands (26) which are designed to perform safety functions,
- at least one actuator (46, 48, 50) to be controlled, and
- an I/O unit (16) remote from the first and second control units (12, 14), which I/O unit is at feast partially configured in the form of a fail-safe subassembly and drives the actuator (46, 48, 50),
the I/O unit (16) being connected to the first control unit (12) via a first interface (40) and being connected to the second control unit (14) via a second interface (42),
and the I/O unit (16) being designed to drive the actuator (46, 48, 50) on the basis of the first and second control commands (24, 26) using an output circuit (68) directly implemented in the I/O unit (16), with the I/O unit (16) for this purpose having an internal processing logic (100) which is capable of combining an operating control command from the first control unit (12) and a second control command (26) from the second control unit (14), with the second control command (26) being an enable signal that is combined with the operating control command such that the actuator (46, 48, 50) can only be in operation if there is no stop command from either of the two control units (12, 14), and
wherein the second control unit (14) is failsafely configured and wherein the first control unit (12) is a standard control unit,
**characterized in that** the I/O unit (16) has multi-channel-redundant output switching elements (72, 74) in the output circuit (68) for driving the actuator (46, 48, 50), with the processing logic (100) supplying a combined control signal to the output circuit (68), and **in that** the I/O unit (16) has at least one input connection (86) for connecting a signalling device (52, 56, 58, 60), the input connection (86) being able to be addressed in a parallel manner both by the first control unit (12) and by the second control unit (14), with the result that both the first control unit (12) and the second control unit (14) can address the input connection (86), and the first control unit (12) and the second control unit (14) are able to read a sensor signal applied to the input connection (86).

2. Apparatus according to Claim 1, **characterized in that** the I/O unit (16) has at least one output switching element (72, 74) for driving the actuator (46, 48, 50) and a feedback circuit (76, 78) which can be used to determine an operating state of the output switching element (72, 74).

3. Apparatus according to one of Claims 1 to 2, **characterized in that** the I/O unit has a head section (112) with the first and second interfaces (40, 42) and an I/O section with a multiplicity of I/O modules (116, 118, 120), the head section (112) being designed to control a plurality of I/O modules (116, 118, 120) together on the basis of the first and second control commands (24, 26).

4. Apparatus according to one of Claims 1 to 3, **characterized in that** the I/O unit (16) and the second control unit (14) are connected to one another via a fail-safe communication connection (22).

5. Apparatus according to Claim 4, **characterized in that** the I/O unit (16) and the first control unit (12) are connected to one another via a non-fail-safe communication connection (20).

6. Apparatus according to Claim 5, **characterized in that** the fail-safe communication connection (22) and the non-fail-safe communication connection (20) are implemented with the aid of separate transmission media (20, 22), in particular are separate bus connections.

7. Apparatus according to Claim 6, **characterized in that** the separate transmission media (20, 22) are combined in a common cable (32).

8. Apparatus according to Claim 4 or 5, **characterized in that** the fail-safe communication connection (22) and the non-fail-safe communication connection (20) are implemented with the aid of a common transmission medium (20, 22), in particular comprise a common bus connection.

9. Apparatus according to one of Claims 1 to 8, **characterized in that** the first and second interfaces (40, 42) are implemented as logically separate interfaces with common hardware (104).

10. Apparatus according to one of Claims 1 to 9, **characterized in that** the first and second interfaces (40, 42) are implemented in the form of two physically separate connection options.

11. Apparatus according to one of Claims 1 to 10, **characterized in that** the I/O unit (16) has at least one output connection (70) for connecting the actuator (46, 48, 50), the output connection (70) being able to be addressed in a parallel manner both by the first control unit (12) and by the second control unit (14).

12. Apparatus according to one of Claims 1 to 11, **characterized in that** the I/O unit (16) has at least one further input connection (86) for connecting a further signalling device (52, 56, 58, 60), the further input connection (86) being able to be addressed only by the first control unit (12) or only by the second control unit (14).

13. I/O unit having a first interface (40) for receiving first control commands (24) from a first control unit (12), which is a standard control unit, and having a second interface (42) for receiving second control commands (26) from a failsafely configured second control unit (14), also having at least one output (70) for connecting an actuator (46, 48, 50) to be driven, the I/O unit (16) being at least partially in the form of a fail-safe subassembly and being designed to drive the actuator (46, 48, 50) on the basis of the first and second control commands (24, 26) using an output circuit (68) directly implemented in the I/O unit (16), with the I/O unit (16) for this purpose having an internal processing logic (100) which is capable of combining an operating control command from the first control unit (12) and a second control command (26) from the second control unit (14), with the second control command (26) being an enable signal that is combined with the operating control command such that the actuator (46, 48, 50) can only be in operation if there is no stop command from either of the two control units (12, 14), **characterized in that** the I/O unit (16) has multi-channel-redundant output switching elements (72, 74) in the output circuit (68) for driving the actuator (46, 48, 50), with the processing logic (100) supplying a combined control signal to the output circuit (68), and **in that** the I/O unit (16) has at least one input connection (86) for connecting a signalling device (52, 56, 58, 60), the input connection (86) being able to be addressed in a parallel manner both by the first control unit (12) and by the second control unit (14), with the result that both the first control unit (12) and the second control unit (14) can address the input connection (86), and the first control unit (12) and the second control unit (14) are able to read a sensor signal applied to the input connection (86).

## Revendications

1. Ensemble de commande automatique du déroulement du fonctionnement d'une installation technique (54), l'ensemble présentant :
une première unité de commande (12) qui forme des premiers ordres de commande (24) conçus pour amener le déroulement du fonctionnement,
une deuxième unité de commande (14) qui forme des deuxièmes ordres de commande (26) conçus pour exécuter des fonctions de sécurité,
au moins un actionneur (46, 48, 50) à commander et
une unité d'entrée-sortie (16) soumise à la première et à la deuxième unité de commande (12, 14) et configurée au moins en partie comme module protégé contre les défauts qui entraîne l'actionneur (46, 48, 50),
l'unité d'entrée sortie (16) étant reliée par une première interface (40) à la première unité de commande (12) et par une deuxième interface (42) à la deuxième unité de commande (14),
l'unité d'entrée-sortie (16) étant configurée pour entraîner l'actionneur (46, 48, 50) en fonction des premiers et des deuxièmes ordres de commande (24, 26), par l'intermédiaire d'un circuit de sortie (68) réalisé directement dans l'unité d'entrée-sortie (16), l'unité d'entrée-sortie (16) possédant à cet effet une logique interne de traitement (100) capable d'associer un ordre de commande de fonctionnement de la première unité de commande (12) et un deuxième ordre de commande (26) de la deuxième unité de commande (14), le deuxième ordre de commande (26) étant un signal de libération superposé à l'ordre de commande de fonctionnement, de telle sorte que l'actionneur (46, 48, 50) ne puisse fonctionner que si aucune des deux unités de commande (12, 14) n'émet un ordre d'arrêt, et la deuxième unité de commande (14) étant protégée des erreurs et la première unité de commande (12) étant une unité de commande standard,
**caractérisé en ce que**
l'unité d'entrée-sortie (16) présente des éléments redondants multicanaux de commutation de sortie (72, 74) qui entraînent l'actionneur (46, 48, 50) dans le circuit de sortie (68) la logique de traitement (100) délivrant un signal de commande combiné au circuit de sortie (68), et
**en ce que** l'unité d'entrée-sortie (16) présente au moins une borne d'entrée (86) destinée à être raccordée à un appareil de communication (52, 56, 58, 60), la borne d'entrée (86) pouvant être adressée en parallèle à la fois par la première unité de commande (12) et par la deuxième unité de commande (14) de telle sorte que tant la première que la deuxième unité de commande (12, 14) puissent adresser la borne d'entrée (86) et
**en ce que** la première unité de commande (12) et la deuxième unité de commande (14) sont aptes à lire un signal de détecteur appliqué sur la borne d'entrée (86).

2. Ensemble selon la revendication 1, **caractérisé en ce que** l'unité d'entrée-sortie (16) présente au moins un élément (72, 74) de commutation de sortie qui entraîne l'actionneur (46, 48, 50) ainsi qu'un circuit de rétroaction (76, 78) qui permet de définir l'état de fonctionnement de l'élément (72, 74) de commutation de sortie.

3. Ensemble selon l'une des revendications 1 à 2, **caractérisé en ce que** l'unité d'entrée-sortie présente une partie de tête (112) dotée de la première et de la deuxième interface (40, 42) ainsi qu'une partie d'entrée-sortie dotée de plusieurs modules d'entrée-sortie (116, 118, 120), la partie de tête (112) étant configurée pour commander ensemble plusieurs modules d'entrée-sortie (116, 118, 120) en fonction des premiers et des deuxièmes ordres de commande (24, 26).

4. Ensemble selon l'une des revendications 1 à 3, **caractérisé en ce que** l'unité d'entrée-sortie (16) et la deuxième unité de commande (14) sont reliées l'une à l'autre par une liaison de communication (22) protégée contre les défauts.

5. Ensemble selon la revendication 4, **caractérisé en ce que** l'unité d'entrée-sortie (16) et la première unité de commande (12) sont reliées l'une à l'autre par une liaison de communication (20) non protégée contre les défauts.

6. Ensemble selon la revendication 5, **caractérisé en ce que** la liaison de communication (22) protégée contre les défauts et la liaison de communication (20) non protégée contre les défauts sont réalisées à l'aide de supports de transfert (20, 22) séparés et en particulier par des liaisons bus distinctes.

7. Ensemble selon la revendication 6, **caractérisé en ce que** les supports de transfert (20, 22) distincts sont combinés dans un câble (32) commun.

8. Ensemble selon les revendications 4 ou 5, **caractérisé en ce que** la liaison de communication (22) protégée contre les défauts et la liaison de communication (20) non protégée contre les défauts sont réalisées à l'aide d'un support de transfert (20, 22) commun et en particulier contiennent une liaison bus commune.

9. Ensemble selon l'une des revendications 1 à 8, **caractérisé en ce que** la première et la deuxième interface (40, 42) sont réalisées sous la forme d'interfaces logiquement séparées à électronique (104) commune.

10. Ensemble selon l'une des revendications 1 à 8, **caractérisé en ce que** la première et la deuxième interface (40, 42) sont réalisées sous la forme de deux possibilités de raccordement physiquement distinctes.

11. Ensemble selon l'une des revendications 1 à 10, **caractérisé en ce que** l'unité d'entrée-sortie (16) présente au moins une borne de sortie (70) destinée à être raccordée à l'actionneur (46, 48, 50), la borne de sortie (70) pouvant être adressée en parallèle à la fois par la première unité de commande (12) et par la deuxième unité de commande (14).

12. Ensemble selon l'une des revendications 1 à 11, **caractérisé en ce que** l'unité d'entrée-sortie (16) présente au moins une autre borne d'entrée (86) destinée à raccorder un autre appareil de communication (52, 56, 58, 60), l'autre borne d'entrée (86) ne pouvant être adressée que par la première unité de commande (12) ou que par la deuxième unité de commande (14).

13. Unité d'entrée-sortie dotée d'une première interface (40) qui reçoit des premiers ordres de commande (24) d'une première unité de commande (12) qui est une unité de commande standard et d'une deuxième interface (42) qui reçoit des deuxièmes ordres de commande (26) d'une deuxième unité de commande (14) protégée contre les défauts, et en outre d'au moins une sortie (70) destinée à être raccordée à un actionneur (46, 48, 50) à entraîner,
l'unité d'entrée-sortie (16) étant configurée au moins en partie comme module protégé contre les défauts et étant apte à entraîner l'actionneur (46, 48, 50) en fonction des premiers et des deuxièmes ordres de commande (24, 26), par l'intermédiaire d'un circuit de sortie (68) réalisé directement dans l'unité d'entrée-sortie (16), l'unité d'entrée-sortie (16) possédant à cet effet une logique interne de traitement (100) capable d'associer un ordre de commande de fonctionnement de la première unité de commande (12) et un deuxième ordre de commande (26) de la deuxième unité de commande (14), le deuxième ordre de commande (26) étant un signal de libération superposé à l'ordre de commande de fonctionnement, de telle sorte que l'actionneur (46, 48, 50) ne puisse fonctionner que si aucune des deux unités de commande (12, 14) n'émet un ordre d'arrêt, **caractérisée en ce que**
l'unité d'entrée-sortie (16) dans le circuit de sortie (68) présente des éléments multicanaux redondants (72, 74) de commutation de sortie qui entraînent l'actionneur (46, 48, 50), la logique de traitement (100) délivrant un signal de commande combiné au circuit de sortie (68),
**en ce que** l'unité d'entrée-sortie (16) présente au moins une borne d'entrée (86) destinée à être raccordée à un appareil de communication (52, 56, 58, 60), la borne d'entrée (86) pouvant être adressée en parallèle à la fois par la première unité de commande (12) et par la deuxième unité de commande (14) de telle sorte que tant la première que la deuxième unité de commande (12, 14) puissent adresser la borne d'entrée (86) et
**en ce que** la première unité de commande (12) et la deuxième unité de commande (14) sont aptes à lire un signal de détecteur appliqué sur la borne d'entrée (86).
